(19) Europäisches Patentamt
European Patent Office
Office européen des brevets

(11) EP 3 537 103 A1

(12) EUROPEAN PATENT APPLICATION

(43) Date of publication:
11.09.2019 Bulletin 2019/37

(51) Int Cl.:
G01B 21/04 (2006.01)   G06T 7/80 (2017.01)

(21) Application number: 19158916.7

(22) Date of filing: 22.02.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.03.2018   JP 2018041248

(71) Applicant: Ricoh Company, Ltd.
Tokyo 143-8555 (JP)

(72) Inventors:
• HORITA, Yuuki
Tokyo, 143-8555 (JP)
• KISHIWADA, Jun
Tokyo, 143-8555 (JP)

(74) Representative: J A Kemp
14 South Square
Gray's Inn
London WC1R 5JJ (GB)

(54) CALIBRATION REFERENCE POINT ACQUISITION SYSTEM AND CALIBRATION REFERENCE POINT ACQUISITION METHOD

(57) Disclosed is a calibration reference point acquisition system for acquiring a calibration reference point to calibrate geometric distortion of an imaging device. The calibration reference point acquisition system includes a pattern light display unit configured to display pattern light to be imaged by the imaging device; a relative orientation change unit configured to change a relative orientation of the imaging device with respect to the pattern light display unit; and a processor configured to calculate a calibration reference point based on the imaged pattern light captured by the imaging device while changing the relative orientation of the imaging device, wherein the pattern light display unit displays the pattern light by adjusting an amount of light in each of regions of the pattern light in multiple stages.

FIG.4

FIG.6

```
                    ┌─────────────┐
                    │    START    │
                    └─────────────┘
                           │
                           ▼                    S1
        ┌──────────────────────────────────────┐
        │      SET IMAGING DEVICE SUBJECT       │
        │           TO CALIBRATION              │
        └──────────────────────────────────────┘
                           │
                           ▼                    S2
        ┌──────────────────────────────────────┐
        │         ADJUST POSITIONS OF           │
        │       IMAGING DEVICE SUBJECT TO       │
        │   CALIBRATION AND CALIBRATION OBJECT  │
        └──────────────────────────────────────┘
                           │◄──────────────────────────┐
                           ▼                    S3      │
        ┌──────────────────────────────────────┐       │
        │      CHANGE RELATIVE ORIENTATION OF   │       │
        │    CAMERA OR PATTERN DISPLAY DEVICE   │       │
        └──────────────────────────────────────┘       │
                           │◄──────────────┐            │
                           ▼          S4    │            │
        ┌──────────────────────────────────┐│           │
        │       DISPLAY PATTERN LIGHT TO    ││           │
        │        PATTERN DISPLAY DEVICE     ││           │
        └──────────────────────────────────┘│           │
                           │          S5     │           │
                           ▼                 │           │
        ┌──────────────────────────────────┐│           │
        │    CAPTURE IMAGE OF PATTERN LIGHT ││           │
        └──────────────────────────────────┘│           │
                           │          S6     │       S10 │
                           ▼                 │  ┌────────────────┐
        ┌──────────────────────────────────┐│  │  SET RELATIVE  │
        │       GENERATE PATTERN LIGHT      ││  │  ORIENTATION   │
        │      WITH PHASE BEING CHANGED     ││  └────────────────┘
        └──────────────────────────────────┘│           ▲
                           │                 │           │
                           ▼          S7     │           │
                    ╱ CHANGE ╲    NO         │           │
                   ◄ OBSERVED FOR ONE ├──────┘           │
                    ╲ PERIOD? ╱                          │
                           │ YES                          │
                           ▼          S8                  │
        ┌──────────────────────────────────────┐         │
        │      CALCULATE COORDINATES OF         │         │
        │     CALIBRATION REFERENCE POINT       │         │
        └──────────────────────────────────────┘         │
                           │          S9                  │
                           ▼                              │
                  ╱ REQUIRED ╲       NO                   │
                 ╱ NUMBER OF   ╲──────────────────────────┘
                ◄ REFERENCE POINTS HAS
                 ╲ BEEN ACQUIRED ╱
                  ╲    ?    ╱
                       │ YES
                       ▼
                ┌─────────────┐
                │     END     │
                └─────────────┘
```

2

**Description**

BACKGROUND OF THE DISCLOSURE

1. Field of the Disclosure

The disclosure discussed herein relates to a calibration reference point acquisition system and a calibration reference point acquisition method.

2. Description of the Related Art

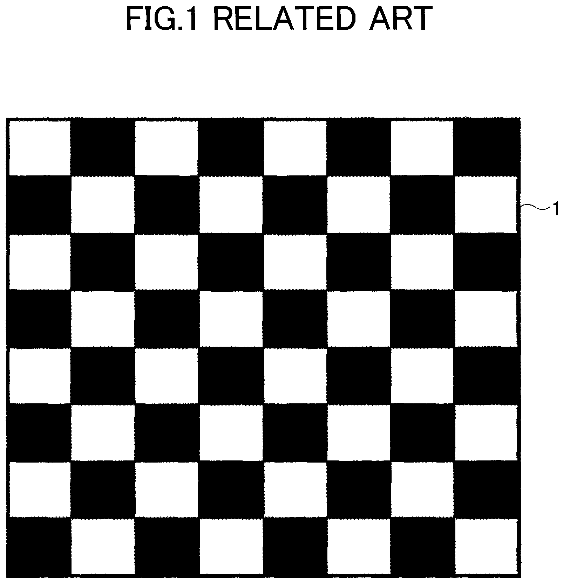

In the field of computer vision, technologies for restoring three-dimensional geometric information from a two-dimensional image, which is obtained by an imaging device such as a camera and the like, have been actively researched. In order to acquire geometric information with high accuracy from a two-dimensional image, it is important to calibrate an imaging device to correct geometric distortion of an image caused by lens aberration or the like. As a known example of such a calibration method, there is a disclosed method for calculating a grid point group array from a captured image of a diagram having a two-dimensional calibration pattern (see FIG. 1), such as a checkerboard pattern, and acquiring correction data for calibration using the grid point group array as calibration reference points.

Japanese Patent No. 5654298 (e.g., refer to Patent Document 1), for example, discloses a technology for acquiring calibration reference points as a method for acquiring calibration reference points. In this technology, calibration reference points are obtained by irradiating an imaging device subject to calibration with non-spreading light while changing an orientation of the image device. This enables high precision calibration in a small scale calibration environment without using a conventional calibration diagram.

In addition, Japanese Unexamined Patent Application Publication No. 2017 - 11537 (Patent Document 2), for example, discloses a calibration technology for an imaging device. In this calibration technology, data for associating pixels with light rays is acquired when an unknown refraction layer is disposed between the imaging device and an imaging subject.

[Related-Art Documents]

[Patent Documents]

Patent Document 1: Japanese Patent No. 5654298
Patent Document 2: Japanese Unexamined Patent Application Publication No. 2017 - 11537

SUMMARY OF THE DISCLOSURE

PROBLEM TO BE SOLVED BY INVENTION

However, according to the related art technologies disclosed in Patent Documents 1 and 2, the accuracy in acquisition of calibration reference points may be reduced due to factors associated with a calibration reference point acquisition system, such as illumination conditions, or due to factors associated with an imaging device, such as a reduced amount of peripheral light of a lens or an imaging element (image sensor).

The present disclosure has been made in light of the above-described points, and it is an object of the present disclosure to improve accuracy in acquisition of calibration reference points.

According to an aspect of embodiments of the present disclosed technology, a calibration reference point acquisition system for acquiring a calibration reference point to calibrate geometric distortion of an imaging device is provided. The calibration reference point acquisition system includes:

a pattern light display unit configured to display pattern light to be imaged by the imaging device;
a relative orientation change unit configured to change a relative orientation of the imaging device with respect to the pattern light display unit; and
a processor configured to calculate a calibration reference point based on an image of the pattern light captured by the imaging device while changing the relative orientation of the imaging device, wherein
the pattern light display unit displays the pattern light by adjusting an amount of light in each of regions of the pattern light in multiple stages.

[Advantageous Effects of Invention]

According to embodiments of the present disclosure, the accuracy in acquisition of calibration reference points may be improved.

BRIEF DESCRIPTION OF THE DRAWINGS

FIG. 1 is a diagram illustrating a checkered pattern of a related art;
FIG. 2 is a functional block diagram illustrating examples of elements of a calibration reference point acquisition system according to a first embodiment;
FIG. 3 is a block diagram illustrating an example of a hardware configuration of an image processor in the calibration reference point acquisition system according to the first embodiment.
FIG. 4 is a diagram illustrating examples of a pattern displayed by a pattern light display unit in the calibration reference point acquisition system according to the first embodiment;
FIG. 5 is a functional block diagram illustrating elements of the image processor in the calibration reference point acquisition system according to the first embodiment;
FIG. 6 is a flowchart illustrating a calibration reference point acquisition process performed by the calibration reference point acquisition system according to the first embodiment;
FIGS. 7A and 7B are diagrams each illustrating a configuration example of a relative orientation change unit for rotating the imaging device in the calibration reference point acquisition system according to the first embodiment;
FIG. 8 is a diagram illustrating a configuration example of the relative orientation change unit for translating the imaging device in the calibration reference point acquisition system according to the first embodiment;
FIG. 9 is a diagram illustrating a configuration example of the relative orientation change unit for changing a relative orientation of the pattern light display unit in the calibration reference point acquisition system according to the first embodiment;
FIG. 10 is a diagram illustrating a configuration example of a calibration reference point acquisition system according to a second embodiment;
FIG. 11 is a diagram illustrating a configuration example of a calibration reference point acquisition system according to a third embodiment; and
FIG. 12 is a functional block diagram illustrating elements of an image processor in a calibration reference point acquisition system according to a fourth embodiment.

DETAILED DESCRIPTION OF THE PREFERRED EMBODIMENTS

In order to let a person skilled in the art better understand the present disclosure, hereinafter, the embodiments of the present disclosure will be concretely described with reference to the drawings. However, it should be noted that the same symbols, which are in the specification and the drawings, stand for constructional elements having basically the same function and structure, and the repetition of the explanations to the constructional elements is omitted.
In the following, embodiments of the present disclosure will be described with reference to the accompanying drawings. In the drawings, duplicated illustration may be omitted by assigning, where appropriate, the same numerals to the same elements.

[FIRST EMBODIMENT]

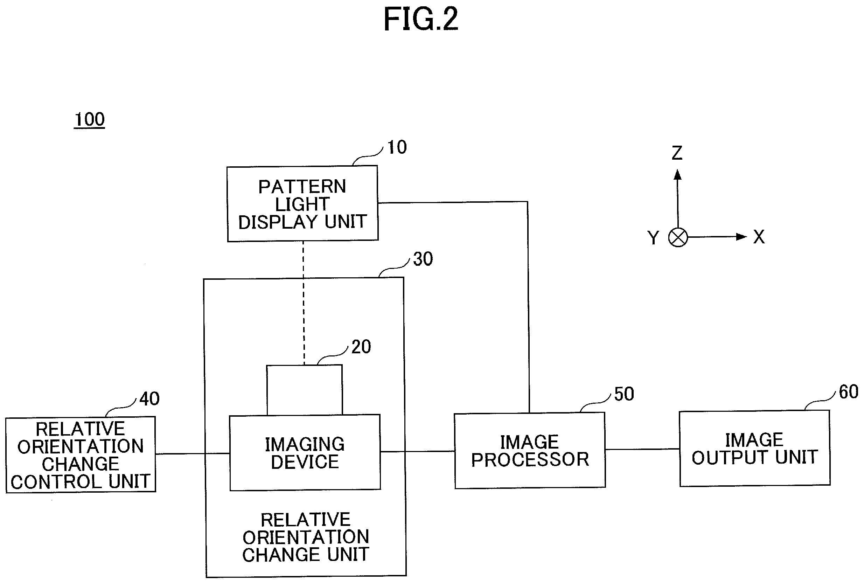

FIG. 2 is a functional block diagram illustrating examples of elements of a calibration reference point acquisition system according to a first embodiment. A calibration reference point acquisition system 100 includes a pattern light display unit 10, a relative orientation change unit 30, a relative orientation change control unit 40, an image processor 50, and an image output unit 60.
The pattern light display unit 10 displays pattern light to be imaged by an imaging device 20. More specifically, the pattern light display unit 10 displays pattern light by adjusting the amount of light in each of regions of the pattern light in multiple stages. In other words, the pattern light display unit 10 displays pattern light by adjusting the amount of light in each of regions of the pattern light in multiple stages with respect to a reference other than coordinates of a three-dimensional space so as to emit pattern light toward the imaging device 20.
The pattern light display unit 10 is implemented by, for example, an organic EL (Electro-Luminescence) display or the like. However, the pattern light display unit 10 is not limited to this example; any display may be used as the pattern light display unit 10 insofar as the amount of light of each of regions of the pattern light may be adjusted in dimensions other than the coordinates of a three-dimensional space, and a size of each region is known. Note that the reference other than the coordinates of a three-dimensional space may, specifically, be time, spectral diffraction (by wavelength), polarized light, a light field, or the like. The light field is information obtained by recording light rays from a subject including three-dimensional information.

The pattern light display unit 10 is an example of a "pattern light display unit".

The imaging device 20 is an imaging device from which calibration reference points are acquired and whose geometric distortion is to be calibrated. The imaging device 20 captures an image of pattern light displayed by the pattern light display unit 10 and outputs the captured image to the image processor 50.

The relative orientation change unit 30 has a mechanism for changing a relative orientation of the imaging device 20 with respect to the pattern light display unit 10. Such a mechanism is implemented by, for example, a rotation stage, a translation stage, or the like. The imaging device 20 is fixed to the rotation stage rotating around an X axis, a Y axis, or a Z axis, which is indicated by an arrow in FIG. 2. By rotating a rotation stage to a predetermined angle, a relative orientation of the imaging device 20 with respect to the pattern light display unit 10 is changed to a predetermined orientation. The imaging device 20 at each predetermined orientation captures an image of pattern light displayed on the pattern light display unit 10. As a result, it possible to acquire calibration reference points over the entire captured image.

However, the above-described configuration of the calibration reference point acquisition system is only an example, and a configuration of the calibration reference point acquisition system is not limited to this example. Any calibration reference point acquisition system using a method capable of acquiring calibration reference points over the entire captured image and for which the acquired calibration reference points cannot be represented by in one three-dimensional plane, or using a method capable of accurately acquiring a relative orientation may be applied to the present embodiment.

Note that the relative orientation change unit 30 is an example of a "relative orientation change unit".

In order to change a relative orientation of the imaging device 20 with respect to the pattern light display unit 10, a relative orientation change control unit 40 assigns a rotation angle instruction or a translation amount instruction to the relative orientation change unit 30. The relative orientation change control unit 40 is implemented by a stage controller or the like, for example.

The relative orientation change control unit 40 assigns a rotation angle instruction or a translation amount instruction to the relative orientation change unit 30 such that the relative orientation change unit 30 rotates or translates according to the corresponding instruction to change the orientation of the imaging device 20. Dedicated hardware having functions of both the relative orientation change unit 30 and the relative orientation change control unit 40 may be applied to the present embodiment. Such hardware is, for example, a robot hand.

The image processor 50 calculates a correspondence relationship between coordinates of the pattern light display unit 10 and each pixel of the imaging device 20, based on an image of pattern light imaged by the imaging device 20. The image processor 50 acquires calibration reference points based on this correspondence relationship.

In addition, the image processor 50 has a function of generating a pattern light and of instructing the pattern light display unit 10 to display the generated pattern light. Further, the image processor 50 has a function of adjusting each setting, such as a shutter speed of the imaging device 20.

The functional configuration of the image processor 50 and the calculation method of the correspondence performed by the image processor 50 will be separately described in further detail. Note that the image processor 50 is an example of a "processor".

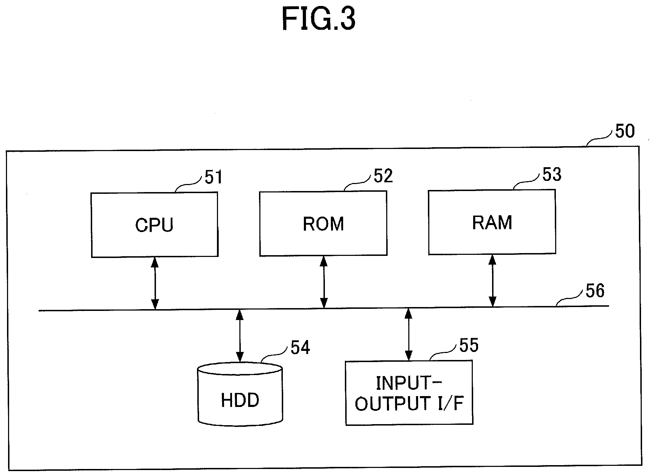

FIG. 3 is a block diagram illustrating an example of a hardware configuration of an image processor 50 according to the first embodiment. The image processor 50 has a CPU (Central Processing Unit) 51, a ROM (Read Only Memory) 52, a RAM (Random Access Memory) 53, an external storage device such as an HDD (Hard Disk Drive) 54, and an input-output I/F. These elements are mutually connected via a system bus 56. The image processor 50 is implemented by, for example, a PC (Personal Computer) or the like.

The CPU 51 is configured to integrally control operations of the image processor 50. Further, the CPU 51 executes image processing and the like of an image captured by the imaging device 20. The CPU 51 executes a program stored in the ROM 52 or the like, using the RAM 53 as a work area (work area), to perform the above-described control and processing, thereby providing various functions to be described later. Note that some or all of the functions of the CPU 51 may be provided by hardware using wired logic (connection).

Referring back to FIG. 2, the image processed by the image processor 50 is transferred to the image output unit 60. The image output unit 60 displays the transferred image. A calibration operator may visually perceive the processed image by the image output unit 60. The image processor 50 may calculate coordinates of each region of the pattern light display unit 10 with respect to each pixel of the image captured by the imaging device 20 and output the calculated coordinates to the image output unit 60. Further, the image processor 50 may also output coordinates as a separate file or to write correction data in a main storage device of the imaging device 20. The image processing program for performing the above processing is stored in a ROM or the like.

The image output unit 60 is implemented by, for example, a liquid crystal monitor. However, the image output unit 60 is not limited to this example. The image output unit 60 may also be implemented by a device or a unit capable of outputting image data and coordinate data transferred by the image processor 50.

The calibration reference point acquisition system 100 according to the first embodiment, which is provided with the pattern light display unit 10, the relative orientation change unit 30, and the relative orientation change control unit 40, is enabled to acquire calibration reference points in a small scale calibration environment. In other words, in the calibration reference point acquisition system 100 according to the first embodiment, it is possible to prevent a distance between a calibration diagram acting as an imaging target and the imaging device 20 from increasing or a calibration diagram from becoming larger, according to a focal distance and an angle of view of the imaging device 20. Note that a calibration diagram is a medium or the like on which an image of a two-dimensional checkerboard pattern 1 as illustrated in FIG. 1 is formed.

Note that each of the elements illustrated in FIG. 2 may be configured as a device. That is, the calibration reference point acquisition system 100 may be configured to include a relative orientation change control unit for the relative orientation change control unit 40, an image processing device for the image processor 50, an image output device for the image output unit 60, and a pattern light display device for the pattern light display unit 10.

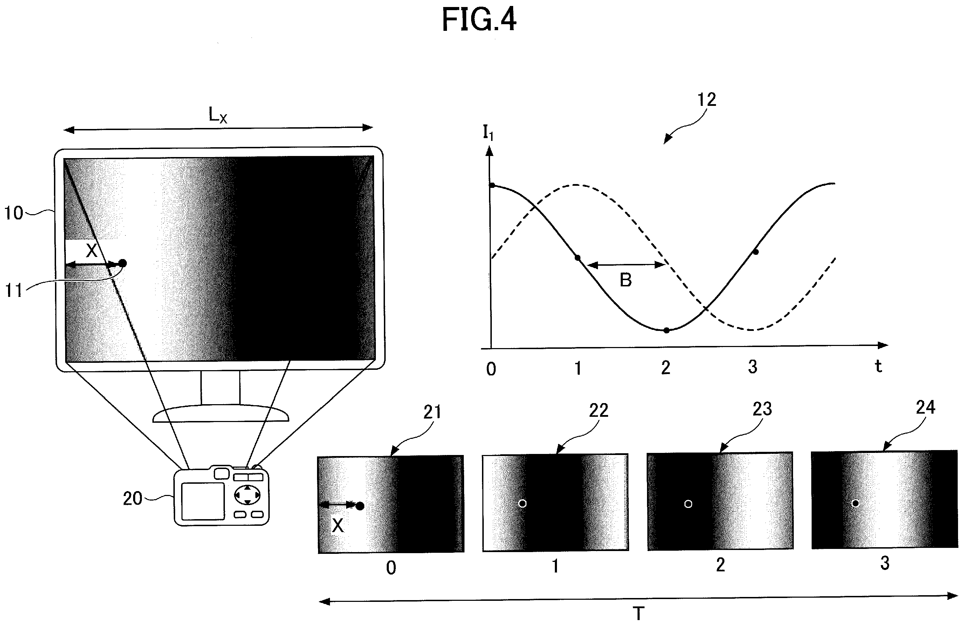

Next, with reference to FIG. 4, a description will be given of a pattern light displayed by the pattern light display unit 10 of the first embodiment and a method for acquiring calibration reference points using pattern light.

FIG. 4 is a diagram illustrating examples of pattern light displayed by the pattern light display unit 10. In FIG. 4, the pattern light display unit 10 with a length Lx in a horizontal direction displays pattern light indicating shading. The density of the pattern light varies sinusoidally in accordance with a position in the horizontal direction of the pattern light display unit 10. A black circle 11 displayed on the pattern light display unit 10 indicates a pixel at a coordinate X when a left end of the pattern light display unit 10 is taken as a reference.

The density of such pattern light is an example of the "amount of light". Pattern light with sinusoidally varying density is an example of "pattern light with the amount of light of each of regions being adjusted in multiple stages" or "pattern light with a sinusoidal distribution of amounts of light across the regions".

In the first embodiment, this pattern light is varied according to time. Images 21 to 24 illustrated at the lower right of FIG. 4 indicate pattern light that varies according to time t. The images 21 to 24 are all pattern light with sinusoidally varying density in the horizontal direction. For example, since a blackest region of pattern light varies from images 21 to 24 according to time, the blackest region gradually moves toward the left direction.

When T represents a time required for a change in the pattern light for one period, the image 21 represents pattern light in an initial state, and the image 22 represents pattern light at a time having elapsed by T/4. The image 23 represents pattern light at a time having elapsed by T/2, and the image 24 represents pattern light at a time having elapsed by $3 \times T/4$. Such pattern light that changes according to time T is an example of "pattern light that changes in time series".

According to a change in time of the pattern light, the density of a pixel changes in the black circle 11. The graph illustrated at the upper right of FIG. 4 indicates a change in density at a position of the black circle 11 according to time t. The horizontal axis represents time t and the vertical axis represents density $I_1$. The solid line graph indicates a change in density with time corresponding to a pixel of black circle 11. The broken line graph indicates a density change of pattern light shifted from the black circle 11 by an initial phase B with time.

In the first embodiment, the pattern light that changes according to time as described above is displayed on the pattern light display unit 10. The imaging device 20 continuously captures images of the pattern light that varies according to time. The images of the pattern light captured by the imaging device 20 are transferred to the image processor 50. The image processor 50 calculates calibration reference points on the basis of the images of the pattern light captured in time series. The calculation procedure will be described below. Note that the brightness of pixels of the pattern light display unit 10 is referred to as density; the brightness of pixels in the imaging device 20 is referred to as luminance.

Given the linearity of response characteristics of the imaging device 20 and the pattern light display unit 10, a time variation $I_2 (x, y, t)$ of a luminance value in a pixel $(x, y)$ at a given position in the captured image is expressed by the following equation (1). The equation (1) indicates a time variation $I_2 (x, y, t)$ of the luminance value of the pattern light with a sinusoidal luminance change for one period. Note that the above "response characteristics" will be described in detail in the later-described fourth embodiment.

[Eq. 1]

$$I_2(x, y, t) = A \sin\left(\frac{2\pi t}{T} + B(x,y)\right) + C$$

$$.....(1)$$

In the equation (1), x and y indicate coordinate values in the horizontal and vertical directions in FIG. 4. In addition, t represents a time, and T represents a time required for changing the sinusoidal pattern light by one period. For the sinusoidal luminance change of the pattern light, "A" represents an amplitude, "B" (x, y) represents an initial phase, and "C" represents a bias (direct current) component.

When the equation (1) is transformed by the addition theorem, and $A_{cos}$ and $A_{sin}$ are expressed by the following equation (2), the initial phase B (x, y) may be expressed by the following equation (3).

[Eq. 2]

$$A_{cos} = A \cos(B(x,y)) , \quad A_{sin} = A \sin(B(x,y))$$

$$.....(2)$$

[Eq. 3]

$$B(x,y) = \tan^{-1} \frac{A_{sin}}{A_{cos}}$$

$$.....(3)$$

When the equation (3) is solved by the method of least squares, the following equation (4) is obtained.

[Eq. 4]

$$
\begin{bmatrix} A_{cos} \\ A_{sin} \\ C \end{bmatrix} = \begin{pmatrix} \sum_{t=0}^{T-1} \cos^2\left(\frac{2\pi t}{T}\right) & -\sum_{t=0}^{T-1} \cos\left(\frac{2\pi t}{T}\right) \sin\left(\frac{2\pi t}{T}\right) & \sum_{t=0}^{T-1} \cos\left(\frac{2\pi t}{T}\right) \\ \sum_{t=0}^{T-1} \cos\left(\frac{2\pi t}{T}\right) \sin\left(\frac{2\pi t}{T}\right) & -\sum_{t=0}^{T-1} \sin^2\left(\frac{2\pi t}{T}\right) & \sum_{t=0}^{T-1} \sin\left(\frac{2\pi t}{T}\right) \\ \sum_{t=0}^{T-1} \cos\left(\frac{2\pi t}{T}\right) & -\sum_{t=0}^{T-1} \sin\left(\frac{2\pi t}{T}\right) & T-1 \end{pmatrix}^{-1} \begin{pmatrix} \sum_{t=0}^{T-1} I(x,y,t)\cos\left(\frac{2\pi t}{T}\right) \\ \sum_{t=0}^{T-1} I(x,y,t)\sin\left(\frac{2\pi t}{T}\right) \\ \sum_{t=0}^{T-1} I(x,y,t) \end{pmatrix}
$$

.....(4)

Using the equations (3) and (4), the initial phase B (x, y) is calculated from the luminance change of the pixel at a given coordinate (x, y). Such a method of calculating the initial phase B while giving a time variation to the pattern light in this way may be hereinafter referred to as "phase shift method".

The coordinate X on the pattern light display unit 10 corresponding to a given pixel may be obtained by the following equation (5).

[Eq. 5]

$$
X(x, y) = \frac{B(x,y) L_x}{2\pi}
$$

.....(5)

Note that $L_x$ is a horizontal length of the pattern light display unit 10.

The calculation process of the coordinate X in the horizontal direction has been described above, and the same the calculation process is also applied to the coordinate Y in the vertical direction. That is, the pattern light display unit 10 displays pattern light with sinusoidally varying density in accordance with a position in the vertical direction. The pattern light is continuously imaged by the imaging device 20 while the pattern light changes according to time. The coordinate Y in the vertical direction may be calculated by performing operations using the captured image, by using the above equations (1) to (5), where the length $L_y$ in the vertical direction is applied instead of the length $L_x$ in the horizontal direction of the pattern light display unit 10.

A component such as density variation for each region of the pattern light display unit 10 or a reduced amount of peripheral light of the imaging device 20 corresponds to a scale factor a to be multiplied by the amplitude A. Further, components such as an illumination condition and the like correspond to the bias component C. Since the scale factor a and the bias component C are canceled during the operations of the equations (1) to (5), these components do not affect the acquired calibration reference points. With application of the above-described phase shift method, factors associated with the calibration reference point acquisition system 100 such as illumination conditions, or factors associated with the imaging device 20 such as a reduced amount of peripheral light of a lens or an imaging element will not affect the acquisition accuracy of the calibration reference point.

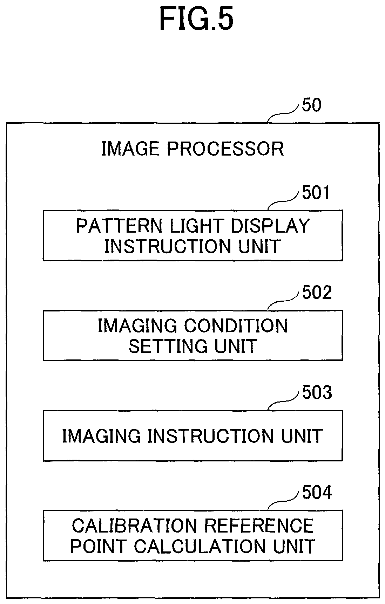

FIG. 5 is a functional block diagram illustrating elements of the image processor 50 in the calibration reference point acquisition system according to the first embodiment. Note that the functional blocks illustrated in FIG. 5 are merely conceptual, and are not necessarily physically configured as illustrated. All or some of the functional blocks may be functionally or physically dispersed and coupled in a given unit. All or some of the processing functions performed in the functional blocks may be implemented by a program executed by the above-described CPU 51, or may be implemented as hardware by wired logic.

The image processor 50 includes a pattern light display instruction unit 501, an imaging condition setting unit 502, an imaging instruction unit 503, and a calibration reference point calculation unit 504.

The pattern light display instruction unit 501 generates predetermined pattern light, and instructs the pattern light display unit 10 to display the generated pattern light. This instruction also includes instructing the pattern light display unit 10 to transmit the generated pattern light.

The predetermined pattern light indicates pattern light having the density distribution indicated by the above-mentioned equation (1). The predetermined pattern light includes pattern light that is changed in time series. The "pattern light that is changed in time series" is pattern light obtained when time t in equation (1) is changed. The pattern light display unit 10 displays pattern light according to an instruction.

The imaging condition setting unit 502 transmits an electric signal to the imaging device 20, and performs adjustment, such as controlling of the shutter speed of the imaging device 20, correcting of gradation or a lookup table of the pattern light display unit 10, and the like, for optimally acquiring calibration reference points.

The imaging instruction unit 503 assigns an instruction to the imaging device 20 to capture the pattern light displayed by the pattern light display unit 10.

The calibration reference point calculation unit 504 inputs the pattern light imaged by the imaging device 20, calculates calibration reference points as described above based on the input pattern light, and outputs the calculated calibration reference points.

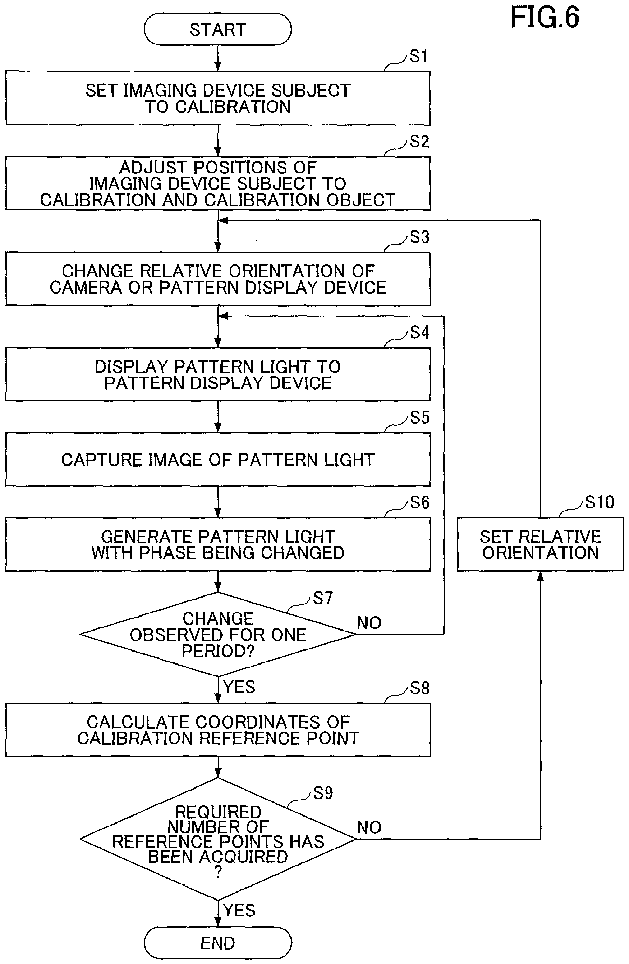

FIG. 6 is a flowchart illustrating a calibration reference point acquisition process performed by the calibration reference point acquisition system 100 according to the first embodiment.

First, the imaging device 20 that is set on the relative orientation change unit 30 is fixed to the relative orientation change unit 30 (step S1).

Subsequently, a positional relationship between the imaging device 20 fixed to the relative orientation change unit 30 and the pattern light display unit 10 is adjusted (step S2).

Next, the relative orientation change control unit 40 instructs the relative orientation change unit 30 to change an orientation of the imaging device 20. The relative orientation change unit 30 rotates or translates the imaging device 20 according to the received instruction (step S3). A process of inputting parameters of the relative orientation to the relative orientation change control unit 40 may be conducted manually by an operator or automatically by an already installed relative orientation change control program.

Subsequently, the pattern light display instruction unit 501 generates predetermined pattern light, and instructs the pattern light display unit 10 to display the generated pattern light (step S4). In response to the instruction, the pattern light display unit 10 displays pattern light. In other words, pattern light enters the imaging device 20 from the pattern light display unit 10. With the pattern light being incident on the imaging device 20, the imaging condition setting unit 502 transmits an electric signal to the imaging device 20 to adjust each of settings, such as a shutter speed of the imaging device 20.

Next, the imaging instruction unit 503 instructs the imaging device 20 to capture an image of the pattern light. In response to the instruction, the imaging device 20 captures an image of the pattern light. The calibration reference point calculation unit 504 inputs the captured image of the pattern light imaged by the imaging device 20 (step S5).

Subsequently, the pattern light display instruction unit 501 generates pattern light with a phase being changed in time series (step S6). Note that in the first embodiment, the calculation based on the phase shift method is executed as described above. However; the present disclosure is not limited to this example insofar as coordinates of pixels of the imaging device 20 are uniquely associated with coordinates of the pattern light display unit 10. For example, as a method of uniquely associating the two sets of coordinates, pattern light using a random number sequence may be generated.

Next, the calibration reference point calculation unit 504 determines whether a change in time series in the pattern light has been obtained for one period (step S7).

When a change in time series in the pattern light has not been obtained for one period (No in step S7), the process returns to step S4, and the pattern light display instruction unit 501 instructs the pattern light display unit 10 to display the generated pattern light.

When a change in time series in the pattern light has been obtained for one period (Yes in step S7), the calibration reference point calculation unit 504 calculates coordinates of each calibration reference point (step S8). Alternatively, the calibration reference point calculation unit 504 may calculate coordinates of each calibration reference point only when information that can be uniquely associated has been acquired.

Next, the calibration reference point calculation unit 504 determines whether a required number of reference points has been acquired (step S9).

When the calibration reference point calculation unit 504 determines that the required number of reference points has been acquired (Yes in step S9), the calibration reference point acquisition process ends. When the calibration reference point calculation unit 504 determines that the required number of reference points has not been acquired (No in step S9), the relative orientation of the imaging device 20 is changed, and the imaging device 20 is subsequently set (step S10). Thereafter, the process returns to step S3, and steps S3 to S9 are repeated.

The required number of calibration reference points is thus acquired as described above. In the example of the calibration reference point acquisition process illustrated with reference to FIG. 6, a part of the calibration reference point acquisition process may be automated by the image processor 50; however, the present disclosure is not limited to this example. The processes associated with the pattern light display instruction, the imaging condition setting, and the imaging instruction that are provided in the image processor 50 may be handled by a calibration operator.

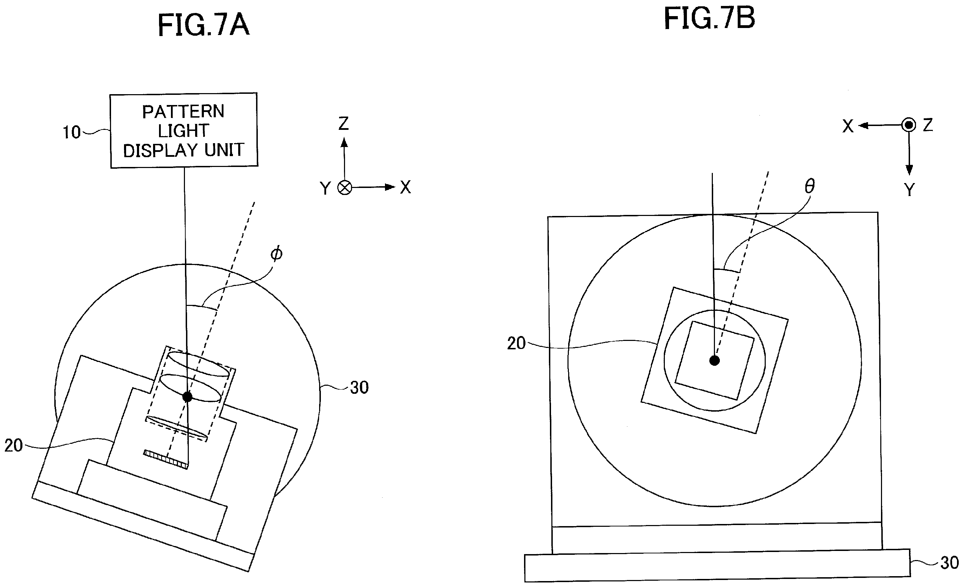

Next, FIGS. 7A and 7B are diagrams illustrating an example of a method for acquiring calibration reference points while changing the relative orientation of the imaging device 20 by rotating the relative orientation change unit 30.

In FIGS. 7A and 7B, only the pattern light display unit 10, the imaging device 20, and the relative orientation change unit 30 are illustrated for simplification, and other elements are omitted from illustration. FIGS. 7A and 7B illustrate an example of the relative orientation change unit 30 that is used as a rotation stage. In FIGS. 7A and 7B, an X axis, a Y axis, and a Z axis indicated by arrows each indicate a rotation axis of the rotation stage.

The imaging device 20 includes an optical system including one or more lenses and an imaging element such as a CCD (Charge Coupled Device) or CMOS (Complementary Metal-Oxide-Semiconductor).

FIG. 7A illustrates an example of the rotation stage that is rotated around the Y axis, and FIG. 7B illustrates an example of the rotation stage that is rotated around the Z axis. In FIG. 7A, the imaging device 20 is rotated by $\varphi$ around the Y axis. In FIG. 7B, the imaging device 20 is rotated by $\theta$ around the Z axis. According to the respective rotations, a position of an image of pattern light formed on the imaging element changes. As described above, an angle-of-view area $(\varphi, \theta)$ may be changed by rotating the imaging device 20 to change an orientation of the imaging device 20.

Each of the rotation angles $\varphi$ and $\theta$ is set according to a corresponding angle-of-view area $(\varphi, \theta)$ of a desired calibration reference point to be acquired, and the calibration reference point is calculated while changing a relative orientation of the imaging device 20. As a result, it is possible to acquire a group of calibration reference points (calibration reference point group) with two or more relative orientations that are not represented by the same three-dimensional plane and in the entire angle-of-view area $(\varphi, \theta)$.

Note that the examples described with reference to FIGS. 7A and 7B are suitable for a case where an angle of view of the imaging device 20 to be calibrated is wide. For example, in a case of a fisheye camera having a half angle of view of 90 degrees or more, it is difficult to physically form an image of light rays by enlarging a calibration diagram used in conventional calibration or by adjusting a relative position by translation. Even in such a case, it is possible to acquire calibration reference points when a relative orientation of the imaging device 20 is changed by rotation as described in the first embodiment.

Note that calibration reference points may also be acquired over the entire angle-of-view area by rotation around the X axis, instead of the Z axis.

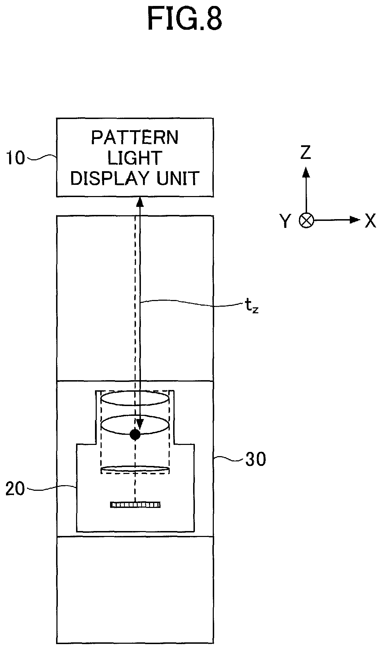

Next, FIG. 8 is a diagram illustrating an example where calibration reference points are acquired while changing a relative orientation of the imaging device 20 by translating the relative orientation change unit 30.

In FIG. 8, only the pattern light display unit 10, the imaging device 20, and the relative orientation change unit 30 are illustrated for simplification, and other elements are omitted from illustration. FIG. 8 illustrates an example of the relative orientation change unit 30 that is used as a translation stage. In FIG. 8, an X axis, a Y axis, and a Z axis indicated by the arrows each indicate a translation axis of the translation stage.

As in the example of FIGS. 7A and 7B, the imaging device 20 has an optical system including one or more lenses and an imaging element such as CCD and CMOS.

As illustrated in FIG. 8, when the imaging device 20 is translated in the Z axis direction by a translation amount $t_z$ with respect to the pattern light display unit 10, a position of an image of the pattern light formed on an imaging element changes. A translation amount $t_z$ is set according to an angle-of-view area of a desired calibration reference point to be acquired, and the calibration reference points are calculated while changing the position of the imaging device 20 in the Z axis direction. As a result, it is possible to acquire a calibration reference point group in two or more relative orientations that are not represented by the same three-dimensional plane and in the entire angle-of-view area.

Note that the example described with reference to FIG. 8 is suitable for a case where an angle of view of the imaging device 20 to be calibrated is narrow. For example, to acquire calibration reference points of the imaging device 20 having a telephoto lens or the like with a narrow angle of view by using the rotation stage, the pattern light from the pattern light display unit 10 tends to deviate from the field of view of the imaging device 20 even at a small rotation angle, compared with a wide-angle lens. Therefore, in order to adjust the pattern light so as to be included within the field of view of the imaging device 20, the rotation stage is required to have high rotation resolution.

Even in such a case, it is possible to adjust pattern light to be included within the field of view of the imaging device 20 relatively easily by using a translation stage.

According to the present embodiment, to acquire calibration reference points of the imaging device 20 having a telephoto lens or the like with a narrow angle of view, such a translation stage, in which the translation amount $t_z$ is set, is obtained in combination with a typically-sized liquid crystal display, organic EL display, and the like. This enables the acquisition of calibration reference points in the entire angle-of-view area without increasing the size of the pattern light display unit 10.

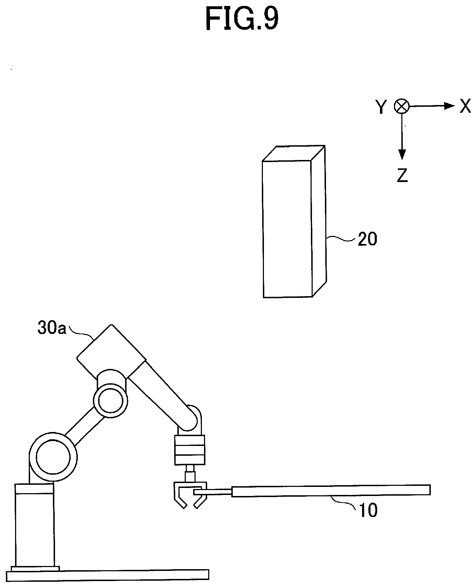

Next, FIG. 9 is a diagram illustrating an example where a relative orientation of the pattern light display unit 10 is changed by the relative orientation change unit 30.

# EP 3 537 103 A1

In FIG. 9, only the pattern light display unit 10, the imaging device 20, and the relative orientation change unit 30 are illustrated for simplification, and other elements are omitted from illustration.

In the example of FIG. 9, a robot arm is illustrated as a relative orientation change unit 30a. In a picking system including the imaging device 20 and the robot arm 30a, a relative positional relationship between the imaging device 20 and the robot arm 30a is important. As described above, it is possible to acquire calibration reference points of the imaging device 20 without losing the relative positional relationship between the imaging device 20 and the robot arm 30a by fixing the pattern light display unit 10 to the relative orientation change unit 30a constituted by a robot arm.

As described above, according to the present embodiment, pattern light that is shifted in phase is displayed on the pattern light display unit 10, an initial phase of the pattern light is calculated from the displayed pattern light, and calibration reference points are acquired based on the calculated initial phase. As a result, it is possible to improve the acquisition accuracy of calibration reference points by reducing adverse effects of factors associated with the calibration reference point acquisition system such as illumination conditions, and also by reducing adverse effects of factors associated with the imaging device 20, such as a reduced amount of peripheral light of a lens or an imaging element provided in the imaging device 20.

According to the present embodiment, a relative orientation of the imaging device 20 may be changed by the relative orientation change unit 30. Thus, it is possible to acquire calibration reference points in a small scale calibration environment by imaging the pattern light displayed on the pattern light display unit 10 for each of predetermined orientations.

According to the present embodiment, for example, even with a camera having a wide angle fisheye lens or a camera having a telephoto lens, it is possible to acquire the calibration reference points over the entire angle-of-view area in a small scale calibration environment by using a rotation stage or a translation stage for the relative orientation change unit 30.

[SECOND EMBODIMENT]

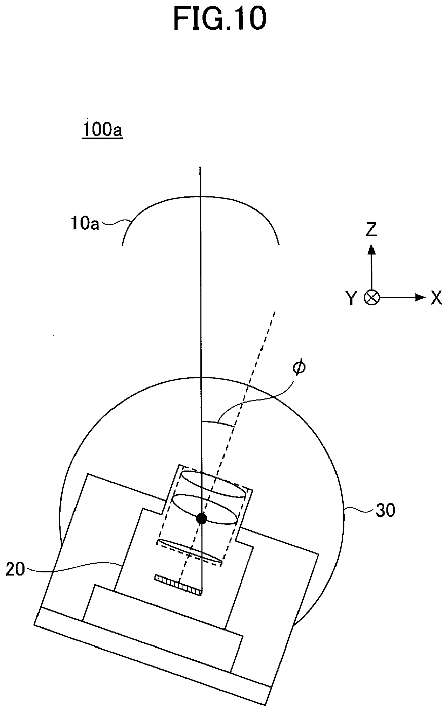

Next, an example of a calibration reference point acquisition system according to a second embodiment will be described with reference to FIG. 10. In the second embodiment, the description of the same elements as those of the previously described first embodiment may be omitted.

FIG. 10 is a diagram illustrating a configuration example of a calibration reference point acquisition system 100a according to the second embodiment. In FIG. 10, only a pattern light display unit 10a, an imaging device 20, and a relative orientation change unit 30 are illustrated for simplification, and other elements are omitted from illustration.

The calibration reference point acquisition system 100a is implemented by the pattern light display unit 10a with a curved surface display. Herein, the curved display indicates a display having a curved display screen rather than a flat display screen. Further, the curved surface may not necessarily be fixed but may be a flexible display that is curbed flexibly. Such a curved surface has a shape expressed by a differentiable function.

A curved surface display or the like having a shape expressed by a differentiable function may be a display that combines minute planar displays of various orientations. In other words, relative orientations to be changed by the relative orientation change unit 30 are completed with one setting.

Accordingly, it is possible to reduce the number of times of acquiring a calibration reference point while changing the relative orientation of the imaging device 20 by the relative orientation change unit 30 by configuring the pattern light display unit 10a with a curved surface display or the like, as well as shortening the acquisition time of a calibration reference point, and simplifying the operations.

The other effects are similar to those described in the first embodiment.

[THIRD EMBODIMENT]

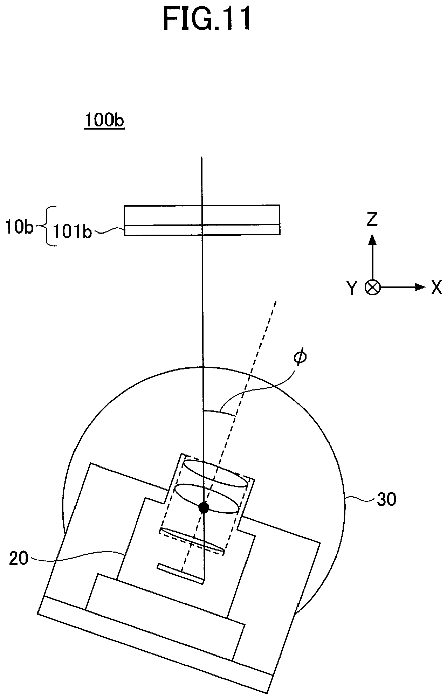

Next, an example of a calibration reference point acquisition system according to a third embodiment will be described with reference to FIG. 11. In the third embodiment, the description of the same elements as those of the previously described first and second embodiments may be omitted.

FIG. 11 is a diagram illustrating a configuration example of a calibration reference point acquisition system 100b according to the third embodiment. In FIG. 11, only a pattern light display unit 10b, an imaging device 20, and a relative orientation change unit 30 are illustrated for simplification, and other elements are omitted from illustration.

In the calibration reference point acquisition system 100b, the pattern light display unit 10b has a diffusion plate 101b. Herein, the diffusing plate 101b indicates an optical member having an effect of diffusing light incident on the diffusing plate in a very wide range to make luminance distribution of an original light source gentle.

In the third embodiment, the diffusion plate 101b is disposed between the pattern light display unit 10b and the imaging device 20. Thus, even when the resolution of the pattern light display unit 10b is low, it is possible to make the pixels blur so as not to be conspicuous, thereby displaying pattern light having a smooth density change. Accordingly, even when the resolution of the pattern light display unit 10b is low, the phase shift method may be accurately executed, and the acquisition accuracy of the calibration reference points can be secured.

The other effects are similar to those described in the first and the second embodiments.

[FOURTH EMBODIMENT]

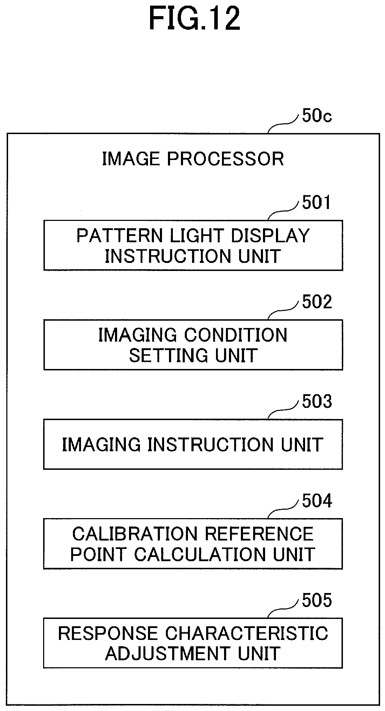

Next, an example of a calibration reference point acquisition system according to a fourth embodiment will be described with reference to FIG. 12. In the fourth embodiment, the description of the same elements as those of the previously described first and second embodiments may be omitted.

FIG. 12 is a functional block diagram illustrating elements of an image processor 50c in a calibration reference point acquisition system according to the fourth embodiment. The image processor 50c has a response characteristic adjustment unit 505.

The response characteristic adjustment unit 505 adjusts an amount of light of the pattern light display unit 10 and luminance of each pixel (pixel luminance) of the imaging device 20, such that a response characteristic of the amount of light of the pattern light display unit 10 and a response characteristic of the pixel luminance of the imaging device 20 have a linear relationship. The response characteristic adjustment unit 505 is an example of "response characteristic adjustment unit".

The amount of light of the pattern light display unit 10 is, for example, a density of each pixel (pixel density) provided in the pattern light display unit 10. The response characteristic of the amount of light of the pattern light display unit 10 is, for example, a characteristic of density of each pixel in the pattern light display unit 10 with respect to a voltage of an input signal for controlling the densities of the pixels in the pattern light display unit 10. A response characteristic of the imaging device 20 is a magnitude of a voltage of an output signal with respect to the amount of light received by each pixel of the imaging device 20, for example.

For example, the response characteristic adjustment unit 505 adjusts a gain of pixel density of the pattern light display unit 10 with respect to an input voltage, and also adjusts a gain of an output voltage with respect to the amount of light received by each of the pixels of the imaging device 20. By adjustment of the respective gains, the response characteristic of the amount of light of the pattern light display unit 10 and the response characteristic of the pixel luminance of the imaging device 20 will have a linear relationship. By adjusting of the response characteristic of the amount of light of the pattern light display unit 10 and the response characteristic of the pixel luminance of the imaging device 20 to have a linear relationship, it is possible to prevent a calculation error of the initial phase B (x, y) by the phase shift method performed by the calibration reference point acquisition system 100c according to the present embodiment. Thus, it is possible to improve the acquisition accuracy of the calibration reference points.

The other effects are similar to those described in the first to the third embodiments.

The calibration reference point acquisition system and the calibration reference point acquisition method according to the first to the fourth embodiments have been described above; however, the present disclosure is not limited to the above embodiments, and various modifications and improvements may be made within the scope of the present disclosure.

While the present disclosure is described with reference to the specific embodiments chosen for purpose of illustration, it should be apparent that the present disclosure is not limited to these embodiments, but numerous modifications could be made thereto by a person skilled in the art without departing from the basic concept and technical scope of the present disclosure.

[Reference Signs List]

10, 10a, 10b pattern light display unit (example of pattern light display unit)
101b diffuser plate
20 imaging device
30, 30a relative orientation change unit (example of relative orientation change unit)
40 relative orientation change control unit
50 image processor (example of processor)
501 pattern light display instruction unit
502 imaging condition setting unit
503 imaging instruction unit
504 calibration reference point calculation unit
505 response characteristic adjustment unit (example of response characteristic adjustment unit)
51 CPU

52 ROM
53 RAM
54 HDD
55 input-output I/F
56 system bus
60 image output unit
100, 100a, 100b, 100c calibration reference point acquisition system

The present application is based on and claims priority to Japanese patent application No. 2018-041248 filed on March 7, 2018, the entire contents of which are hereby incorporated by reference.

**Claims**

1. A calibration reference point acquisition system for acquiring a calibration reference point to calibrate geometric distortion of an imaging device, the calibration reference point acquisition system comprising:

   a pattern light display unit configured to display pattern light to be imaged by the imaging device;
   a relative orientation change unit configured to change a relative orientation of the imaging device with respect to the pattern light display unit; and
   a processor configured to calculate a calibration reference point based on the imaged pattern light captured by the imaging device while changing the relative orientation of the imaging device, wherein
   the pattern light display unit displays the pattern light by adjusting an amount of light in each of regions of the pattern light in multiple stages.

2. The calibration reference point acquisition system according to claim 1, wherein
   the pattern light that is displayed by the pattern light display unit changes in time series.

3. The calibration reference point acquisition system according to claim 1 or 2, wherein
   the pattern light that is displayed by the pattern light display unit has a sinusoidal distribution of the amounts of light across the regions.

4. The calibration reference point acquisition system according to any one of claims 1 to 3, wherein
   the processor includes
   a pattern light display instruction unit configured to instruct the pattern light display unit to display the pattern light,
   an imaging instruction unit configured to instruct the imaging device to image the pattern light, and
   a calibration reference point calculation unit configured to calculate a calibration reference point based on the imaged pattern light.

5. The calibration reference point acquisition system according to any one of claims 1 to 4, wherein
   the pattern light display unit has a shape expressed by a differentiable function.

6. The calibration reference point acquisition system according to claim 5, wherein
   the pattern light display unit is a curved display.

7. The calibration reference point acquisition system according to any one of claims 1 to 6, wherein
   the pattern light display unit displays the pattern light through a diffusion plate.

8. The calibration reference point acquisition system according to any one of claims 1 to 7, further comprising:
   a response characteristic adjustment unit configured to adjust a response characteristic of the amount of light of the pattern light display unit and a response characteristic of pixel luminance of the imaging device.

9. The calibration reference point acquisition system according to claim 8, wherein
   the response characteristic adjustment unit adjusts the response characteristic of the amount of light and the response characteristic of the pixel luminance, based on the pattern light that is displayed by the pattern light display unit and that has a sinusoidal distribution of the amounts of light across the regions.

10. A calibration reference point acquisition method for acquiring a calibration reference point to calibrate geometric distortion of an imaging device, the calibration reference point acquisition method comprising:

displaying pattern light on a pattern light display unit to be imaged by the imaging device;
changing a relative orientation of the imaging device with respect to the pattern light display unit;
calculating a calibration reference point based on an image of the pattern light captured by the imaging device while changing the relative orientation of the imaging device, wherein
the displaying of the pattern light includes displaying the pattern light by adjusting an amount of light in each of regions of the pattern light in multiple stages.

FIG.1 RELATED ART

# FIG.2

EP 3 537 103 A1

<u>100</u>

PATTERN LIGHT DISPLAY UNIT — 10

RELATIVE ORIENTATION CHANGE CONTROL UNIT — 40

IMAGING DEVICE — 20

RELATIVE ORIENTATION CHANGE UNIT — 30

IMAGE PROCESSOR — 50

IMAGE OUTPUT UNIT — 60

Z

Y ⊗ → X

# FIG.3

# FIG.4

EP 3 537 103 A1

# FIG.5

/50

IMAGE PROCESSOR

/501

PATTERN LIGHT DISPLAY
INSTRUCTION UNIT

/502

IMAGING CONDITION
SETTING UNIT

/503

IMAGING INSTRUCTION UNIT

/504

CALIBRATION REFERENCE
POINT CALCULATION UNIT

**FIG.6**

START

$\downarrow$ S1

SET IMAGING DEVICE SUBJECT
TO CALIBRATION

$\downarrow$ S2

ADJUST POSITIONS OF
IMAGING DEVICE SUBJECT TO
CALIBRATION AND CALIBRATION OBJECT

$\downarrow$ S3

CHANGE RELATIVE ORIENTATION OF
CAMERA OR PATTERN DISPLAY DEVICE

$\downarrow$ S4

DISPLAY PATTERN LIGHT TO
PATTERN DISPLAY DEVICE

$\downarrow$ S5

CAPTURE IMAGE OF PATTERN LIGHT

$\downarrow$ S6

GENERATE PATTERN LIGHT
WITH PHASE BEING CHANGED

$\downarrow$ S7

CHANGE OBSERVED FOR ONE PERIOD? — NO

$\downarrow$ YES

S8

CALCULATE COORDINATES OF
CALIBRATION REFERENCE POINT

$\downarrow$ S9

REQUIRED NUMBER OF REFERENCE POINTS HAS BEEN ACQUIRED? — NO

$\downarrow$ YES

END

S10

SET RELATIVE
ORIENTATION

20

# FIG.7A

10 — PATTERN LIGHT DISPLAY UNIT

20

30

φ

Z

Y ⊗ → X

# FIG.7B

X ← ⊙ Z

Y

θ

20

30

EP 3 537 103 A1

# FIG.8

# FIG.9

# FIG.10

100a

10a

30

20

Z

Y ⊗

X

φ

# FIG.11

# FIG.12

50c

**IMAGE PROCESSOR**

501

PATTERN LIGHT DISPLAY
INSTRUCTION UNIT

502

IMAGING CONDITION
SETTING UNIT

503

IMAGING INSTRUCTION UNIT

504

CALIBRATION REFERENCE
POINT CALCULATION UNIT

505

RESPONSE CHARACTERISTIC
ADJUSTMENT UNIT

Europäisches
Patentamt

European
Patent Office

Office européen
des brevets

# EUROPEAN SEARCH REPORT

Application Number

EP 19 15 8916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Christoph Schmalz ET AL: "Camera calibration: active versus passive targets", Optical Engineering, 1 November 2011 (2011-11-01), pages 113601-113601, XP055542278, DOI: 10.1117/1.3643726 Retrieved from the Internet: URL:http://citeseerx.ist.psu.edu/viewdoc/download?doi=10.1.1.440.5672&rep=rep1&type=pdf | 1-6,8-10 | INV. G01B21/04 G06T7/80 |
| Y | * the whole document * | 5-9 | |
| X | US 9 489 735 B1 (REITMAYR GERHARD [AT]) 8 November 2016 (2016-11-08) | 1-4,8-10 | |
| Y | * abstract * * figures 1A, 1B, 2 * * column 3, line 28 - column 6, line 19 * * column 7, lines 17-28 * | 8,9 | |
| X | KEWEI E ET AL: "Novel method for high accuracy figure measurement of optical flat", OPTICS AND LASERS IN ENGINEERING, ELSEVIER, AMSTERDAM, NL, vol. 88, 27 August 2016 (2016-08-27), pages 162-166, XP029750666, ISSN: 0143-8166, DOI: 10.1016/J.OPTLASENG.2016.07.011 * abstract * * right-hand column, paragraph 2 * * chapters 3.1 and 3.2 * | 1,2,4,10 | TECHNICAL FIELDS SEARCHED (IPC) G01B G06T B25J |
| Y | JP 2013 205407 A (MOIRE INST INC) 7 October 2013 (2013-10-07) * paragraph [[0048]] * | 7 | |

-/--

The present search report has been drawn up for all claims

| Place of search | Date of completion of the search | Examiner |
|---|---|---|
| Munich | 4 July 2019 | Poizat, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 15 8916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 619 144 B1 (CHANG SAMUEL HENRY [US] ET AL) 31 December 2013 (2013-12-31) * abstract * * figures 1,3-6 * * column 1, line 51 - column 2, line 18 * * column 2, line 52 - column 8, line 4 * ----- | 1-10 | |
| Y | JP 2010 172986 A (FUJI ELECTRIC HOLDINGS) 12 August 2010 (2010-08-12) * the whole document * ----- | 1-10 | |

TECHNICAL FIELDS
SEARCHED (IPC)

The present search report has been drawn up for all claims

| Place of search | Date of completion of the search | Examiner |
|---|---|---|
| Munich | 4 July 2019 | Poizat, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 19 15 8916

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2019

| Patent document cited in search report | | Publication date | Patent family member(s) | | Publication date |
|---|---|---|---|---|---|
| US 9489735 | B1 | 08-11-2016 | US<br>WO | 9489735 B1<br>2017048382 A1 | 08-11-2016<br>23-03-2017 |
| JP 2013205407 | A | 07-10-2013 | JP<br>JP | 5956218 B2<br>2013205407 A | 27-07-2016<br>07-10-2013 |
| US 8619144 | B1 | 31-12-2013 | NONE | | |
| JP 2010172986 | A | 12-08-2010 | JP<br>JP | 5365218 B2<br>2010172986 A | 11-12-2013<br>12-08-2010 |

EPO FORM P0459

For more details about this annex : see Official Journal of the European Patent Office, No. 12/82

## REFERENCES CITED IN THE DESCRIPTION

**Patent documents cited in the description**

- JP 5654298 B
- JP 2017011537 A
- JP 2018041248 A